# EUROPEAN PATENT APPLICATION

(11) **EP 2 292 561 A2**
(43) Date of publication of application: **09.03.2011**
(21) Application number: 10175177.4
(22) Date of filing: 03.09.2010
(51) Int. Cl.: C02F 1/42, C02F 1/28, C02F 101/10, C02F 101/20, C02F 101/22, C02F 103/00, C02F 103/06, C02F 103/10

(54) **Removal of oxo anions from silicate-containing water**

(30) Priority: 08.09.2009 US 555261
(71) Applicant: LANXESS Deutschland GmbH, 51369 Leverkusen (DE)
(72) Inventor: Neumann, Stefan, 51375, Leverkusen (DE); Klipper, Reinhold, 50933, Köln (DE); Stoll, Jens, 51371, Leverkusen (DE); Breuer, Silvia, 51371, Leverkusen (DE); Trokowski, Sieglinde, 51371, Leverkusen (DE); Chudzik-Raeth, Brigitte, 40764, Langenfeld (DE); Chou, Wei Hsin, Taoyuan Country 326 (TW); Fatula, Phil, Beaver Falls, PA 15010 (US); Decola, Tony, Canonsburg, PA 15317 (US)

(57) **Abstract**

The present invention relates to a process for removing oxo anions from water and aqueous solutions having a high proportion of silicate by means of a filter arrangement comprising at least one anion exchanger and at least one oxo anion-specific adsorber, and to a filter arrangement to be used for this purpose.
Water to be purified flows through at least one anion exchanger in a filter unit C1 which is connected to a closed secondary brine circulation comprising at least one oxo anion-selective adsorber in a filter unit C2, the water to be purified not coming into direct contact with the oxo anion-selective adsorber.

## Description

The present invention relates to a process for removing oxo anions from water and aqueous solutions having a high proportion of silicate by means of a combination of at least one anion exchanger and at least one oxo anion-specific adsorber, and an apparatus or filter arrangement to be used for this purpose.

Oxo anions in the context of the present invention have the formulae XₙOₘ^{-,}, XₙOₘ²⁻, XₙOₘ³⁻, HXₙOₘ⁻ or H₂XₙOₘ²⁻, in which n represents an integer 1, 2, 3 or 4, m represents an integer 3, 4, 6, 7 or 13 and X represents a metal series As, Sb, Bi, Se, Cr, U. According to the invention, the term oxo anions preferably represents the formulae XOₘ²-, XOₘ³⁻, HXOₘ⁻ or HXOₘ²⁻, in which m represents an integer 3 or 4 and X represents a metal of the series consisting of As, Sb, Se, Bi, Cr, U. According to the invention, the term oxo anions particularly preferably represents oxo anions of arsenic in the oxidation states (III) and (V), of antimony in the oxidation states (III) and (V), of chromium as chromate, of bismuth as bismuthate, of selenium as selenate. According to the invention, the oxo anions are very particularly preferably H₂AsO₄⁻, H₂SbO₄⁻, HAsO₃²⁻ HSbO₃²⁻, AsO₄³⁻, SbO₄³⁻. The oxo anions are particularly preferably H₂AsO₄⁻, HAsO₃²⁻, AsO₄³⁻. These oxo anions of arsenic as mentioned above, which are to be removed in particular according to the invention, are also designated below simply as arsenic.

The requirements regarding the purity of drinking water have substantially increased in recent decades. Health authorities of numerous countries have worked out limits for heavy metal concentrations in waters. This applies to a multiplicity of the abovementioned oxo anions, but in particular to those of arsenic, selenium, antimony or chromium.

Under certain conditions, for example, arsenic compounds may be leached from rocks and may thus enter the groundwater. In natural bodies of water, arsenic occurs in the form of oxidic compounds comprising trivalent and pentavalent arsenic. It is found that mainly the species H₃AsO₃, H₂AsO₃⁻, HAsO₄²⁻, HAsO₄²⁻ occur at the pH values prevailing in natural bodies of water.

In addition to the chromium, antimony and selenium compounds, readily absorbable As compounds are highly toxic and carcinogenic. However, the bismuth entering the groundwater from ore mining is also not safe with regard to health.

In many regions of the USA, India, Bangladesh and China and in South America, in some cases very high concentrations of arsenic occur in the groundwater.

Numerous medical studies now show that pathological skin changes (hyperkeratoses) and various types of tumours may develop in humans who are exposed for a long time to high arsenic contaminations, owing to chronic arsenic poisoning.

On the basis of medical studies, the World Health Organisation WHO recommended a limit for arsenic in drinking water of 10 µg/l worldwide in 1992.

In many European countries and in the USA, this value is still exceeded. In Germany, 10 µg/l have been complied with since 1996; the limit of 10 µg/l has been applicable in the EU countries since 2003 and in the USA since 2006.

Ion exchangers are used in a variety of ways for purifying raw waters, wastewaters and aqueous process streams. Ion exchangers are also suitable for removing oxo anions, for example arsenate. Thus, in Journal of American Chemical Society, B and 69, page 2874 et seq. (1947), R. Kunin and J. Meyers described the exchange of anions, such as, for example, arsenate, with ion exchangers which have primary, secondary or tertiary amine groups.

Although conventional anion exchangers take up arsenic, they have short service lives owing to their only low selectivity and are therefore not economical when they are used alone or do not produce a great deal of salt-containing wastewater from the regeneration.

DE 10 2006 051 116 A1 discloses a filter arrangement which comprises an ion exchanger of conventional design in the normal flow path between the water feed and a filter filled with manganese dioxide. In the downstream region, a calcite-based filter which deacidifies the water is arranged behind the catalytic filter filled with manganese dioxide.

In addition to conventional anion exchangers, there are now, however, also so-called hybrid ion exchangers which represent a composite material comprising anion exchanger and metal oxide material and/or metal hydroxide material. Compared with granules comprising purely inorganic material, the hybrid ion exchangers have the advantages of substantially higher mechanical stability and the possibility of regeneratability. Examples of hybrid ion exchangers are described in WO 2004/110623A1, EP 1495800 A2 or EP-A 1568660 A1.

Both the hybrid ion exchangers and purely inorganic adsorbers bind not only arsenic but also phosphate and silicate. If the silicate concentration in the drinking water is substantially higher than 50 mg/l, the uptake of arsenic by these adsorber types is greatly impaired.

The problem of the coadsorption of silicate as competing effect in the adsorption of arsenic from groundwater for obtaining drinking water was the subject of a lecture by W. Driehaus, GEH Wasserchemie GmbH & Co KG at the conference "Arsen 2005 - Sanierung von Arsen-Kontaminationen in Böden, Grund- und Oberflächenwässern [Arsenic 2005 - Clean-up of arsenic contaminations in soils, groundwater and surface waters]", 19-20 April 2005, Leipzig, Germany.

In the case of the use of ion exchangers, too, this competing effect of the silicate plays a role and hinders the purification of waters with regard to arsenic.

It was therefore the object to develop a process or an apparatus which compensates the competition of the silicate in the oxo anion adsorption for the purification of waters by means of ion exchangers.

The object is achieved by, and the present invention therefore relates to, a process for the adsorption of oxo anions from silicate-containing waters, **characterized in that**, for the primary treatment and for the removal of the oxo anion to be removed, the water to be purified is passed via at least one moderately basic or strongly basic anion exchanger of type I or of type II which is connected via a secondary brine circulation to at least one oxo anion-selective adsorber, and the water to be purified does not come into direct contact with the oxo anion-selective adsorber.

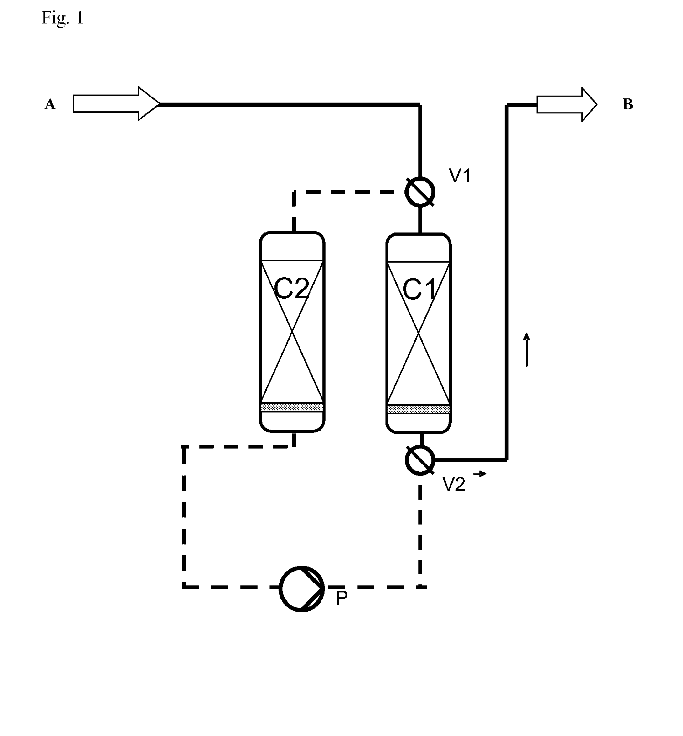

However, the present invention also relates to a filter arrangement for removing oxo anions from silicate-containing water according to Fig. 1, **characterized in that** the water to be purified flows through at least one anion exchanger in a filter unit C1 which is connected via a valve V1 before the filter unit C1 and a further valve V2 behind the filter unit C1 to a closed secondary brine circulation comprising at least one oxo anion-selective adsorber in a filter unit C2, the secondary brine circulation being operated with a pump P and the water to be purified not coming into direct contact with the oxo anion-selective adsorber.

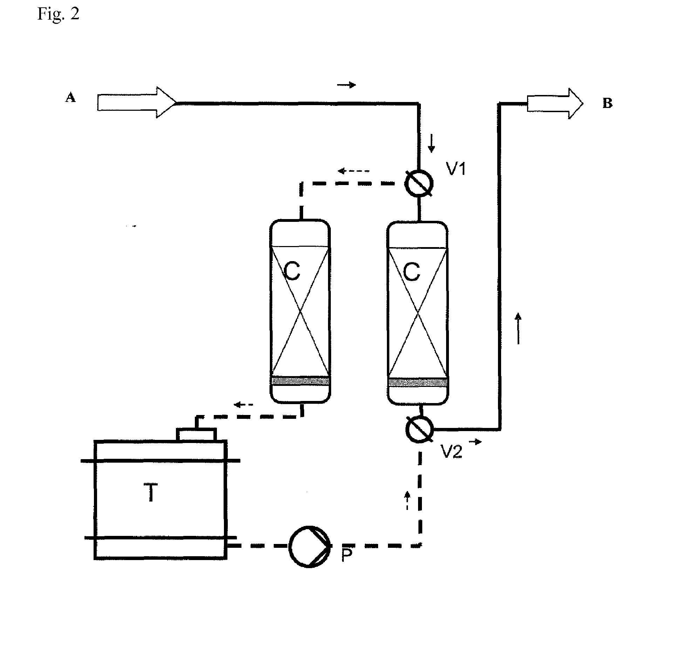

In a preferred embodiment, the filter arrangement for the removal of oxo anions from silicate-containing water also has a storage tank T1 for the brine, as shown in Fig. 2.

In another preferred embodiment of the present invention, the secondary brine circulation is operated countercurrently for loading the anion exchanger in filter unit C1 (represented by arrows in Fig. 2).

In Fig. 1 and 2, the further meanings are as follows
A = oxo anion-containing water having a proportion of silicate and
B = purified water freed from oxo anions.

Surprisingly, the process according to the invention in the filter arrangement according to the invention leads to oxo anion-free waters, preferably to drinking water, without silicates causing the actual oxo anion adsorber to become prematurely exhausted.

Fouling of the pores of the oxo anion adsorber, in particular on using a metal-doped ion exchanger and hence blocking of entire resin beds are prevented.

The apparatus and the process can be used at all silicate concentrations in the water to be purified, preferably at silicate concentrations > 50 mg/litre.

Water having a silicate content of 50 to 150 mg/l of SiO₂ are preferably purified, particularly preferably having a silicate content of 75 to 100 mg/l of SiO₂.

The present invention therefore also relates to the use of a filter arrangement comprising at least one anion exchanger and at least one oxo anion-selective adsorber, which are connected to one another via a secondary brine circulation, for selectively separating off oxo anions from silicate-containing waters without the silicate-containing water to be purified coming into direct contact with the oxo anion-selective adsorber.

Waters to be purified in the context of the present invention are preferably groundwaters, wastewaters from industrial plants or ore mining or bodies of surface water or mountain waters, which have an increased proportion of the oxo anions described above, in particular oxo anions of arsenic, of antimony, of selenium or of bismuth, in particular of arsenic.

The gel-like or macroporous, anion-exchanging organic material of type I or of type II which is to be used in filter unit C1 is preferably an anion-exchanging organic material which has primary, secondary, tertiary and/or quaternary aminomethyl, dimethylamino, trimethylammonium, dimethylhydroxyethylammonium, ethylenediamine, diethylenetriamine, triethylenetetramine, dimethylaminopropylamine, trimethylaminopropylamine or dimethylhydroxyethylpropylamine groups, as described, for example, in Ullmann (vol. A14; page 393 et seq.), in DT 24 18 976 or in DT 22 11 134 and the matrix of which are obtained by condensation (e.g. phenol-formaldehyde) or by bead polymerization, preferably of crosslinked styrene-based or acrylate-based copolymers.

Anion exchangers having strongly basic trimethylammonium groups which are particularly preferred according to the invention are designated as type 1 resins - cf. Ludwig Hartinger, Handbuch der Abwasser - und Recyclingtechnik [Handbook of wastewater and recycling technology], Hanser, 1991 page 405 et seq..

Bead-like anion exchangers having dimethylhydroxyethylammonium groups are alternatively particularly preferably used. These anion exchangers are designated as so-called type II resins - cf. Ludwig Hartinger, Handbuch der Abwasser - und Recyclingtechnik [Handbook of wastewater and recycling technology], Hanser, 1991 page 358 et seq.

The basic anion exchangers to be used according to the invention can be used both in heterodisperse bead size distribution and in monodisperse bead size distribution. According to the invention, monodisperse basic anion exchangers are preferably used. Their particle size is in general 250 to 1250 µm, preferably from 540 to 580 µm.

The monodisperse bead polymers on which the monodisperse anion exchangers are based can be prepared by known processes, such as, for example, fractionation, atomization, or jetting or by the seed/feed technique.

The preparation of monodisperse ion exchangers is known in principle to the person skilled in the art. In addition to the fractionation of heterodisperse ion exchangers by sieving, a distinction is made substantially between two direct preparation processes, namely atomization or jetting and the seed/feed process in the preparation of the precursors, the monodisperse bead polymers. In the case of the seed/feed process, a monodisperse feed is used, which in turn can be produced, for example, by sieving or by jetting. According to the invention, monodisperse anion exchangers obtainable by an atomization process or jetting in filter unit C1 are preferred.

In the present application, those bead polymers or ion exchangers in which the uniformity coefficient of the distribution curve is less than or equal to 1.2 are designated as monodisperse. The quotient of the sizes d60 and d10 is designated as the uniformity coefficient. D60 describes the diameter at which 60% by mass in the distribution curve are smaller and 40% by mass are larger or the same. D10 designates the diameter at which 10% by mass in the distribution curve are smaller and 90% by mass are larger or the same.

The monodisperse bead polymer, the precursor of the ion exchanger, can be prepared, for example, by reacting monodisperse, optionally encapsulated monomer drops consisting of a monovinylaromatic compound, a polyvinylaromatic compound and an initiator or initiator mixture and optionally a porogen in aqueous suspension. The presence of a porogen is absolutely essential for obtaining macroporous bead polymers for the preparation of macroporous ion exchangers. According to the invention, both gel-like and macroporous monodisperse basic anion exchangers can be used. In a preferred embodiment of the present invention, monodisperse basic anion exchangers are used, for the preparation of which monodisperse bead polymers are employed with the use of microencapsulated monomer droplets. The various preparation processes for monodisperse bead polymers, both according to the jetting principle and according to the seed/feed principle, are known to the person skilled in the art from the prior art. At this point, reference may be made to US-A 4,444 961, EP-A 0 046 535, US-A 4,419,245 and WO 93/12167 A1.

According to the invention compounds such as styrene, vinyltoluene, ethylstyrene, alphamethylstyrene, chlorostyrene or chloromethylstyrene are preferably used as monovinylaromatic unsaturated compounds.

Aliphatic or aromatic compounds carrying divinyl groups are preferably used as polyvinylaromatic compounds effective as crosslinking agents. These include divinylbenzene, divinyltoluene, trivinylbenzene, ethylene glycol dimethacrylate, trimethylolpropane trimethacrylate, 1,5-hexadiene, 1,7-octadiene, 2,5-dimethyl-1,5-hexadiene and divinyl ether.

Divinyl ethers preferred according to the invention are compounds of the general formula (I) 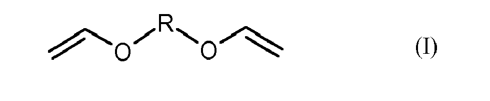 in which
- R: represents a radical of the series consisting of CₙH₂ₙ, (CₘH₂ₘ-O)ₚ-CₘH₂ₘ or CH₂-C₆H₄-CH₂ and n denotes ≥ 2, m denotes 2 to 8 and p denotes ≥ 2.

In the case of n >2, polyvinyl ethers preferred according to the invention are trivinyl ethers of glycerol, trimethylolpropane or tetravinyl ethers of pentaerythritol.

Divinyl ethers of ethylene glycol, di-, tetra- or polyethylene glycol, butanediol or poly-THF or the corresponding tri- or tetravinyl ethers are particularly preferably used. The divinyl ethers of butanediol and diethylene glycol, as described in EP-A 11 10 608, are particularly preferred.

The macroporous property desired as an alternative to the gel-like property is imparted to the ion exchangers actually during the synthesis of the precursors thereof, the bead polymers. The addition of a so-called porogen is absolutely essential for this purpose. The relationship between ion exchangers and their macroporous structure is described in German Auslegeschrift [German Published Specification] DE 1045102 (1957) and in German Auslegeschrift DE 1113570 (1957). In particular, organic substances which dissolve in the monomer but poorly dissolve or swell in the polymer are suitable as a porogen for the preparation of macroporous bead polymers to be used according to the invention, in order to obtain macroporous anion exchangers. Preferred aliphatic hydrocarbons are octane, isooctane, decane, isododecane, or alcohols having 4 to 10 carbon atoms. Particularly preferred alcohols are butanol, hexanol and octanol.

In addition to the monodisperse gel-like basic anion exchangers, monodisperse basic anion exchangers having a macroporous structure are, according to the invention, preferably to be used in filter unit C1. The term "macroporous" is known to the person skilled in the art. Details are described, for example, in J.R. Millar et al, J. Chem. Soc. 1963, 218. The macroporous ion exchangers have a pore volume, determined by mercury porosimetry, of 0.1 to 2.2 ml/g, preferably of 0.4 to 1.8 ml/g.

The functionalization of the bead polymers obtainable according to the prior art to give monodisperse, basic anion exchangers by the phthalimide process or by the chloromethylation process is likewise substantially known to the person skilled in the art from the prior art. Thus, for example, EP-A 1078688 describes a process for the preparation of monodisperse, macroporous anion exchangers having basic groups by the so-called phthalimide process.

The functionalization of the crosslinked styrene-based bead polymers by the chloromethylation process to give anion exchangers is described in EP-A 1000660.

The preparation of acryloyl-based anion exchangers is described, for example, in US 2675359, CZ A 169356, DD 99587 and US 5414020.

Anion exchangers preferably to be used according to the invention in filter unit C1 are the resins MP 62, M+ MP 64, AP 49, M+ M 500, M 511, M+ M 600, M+ MP 500, M+ MP 600, AP 246, S 6328 A, S 5428 A which are sold by Lanxess Deutschland GmbH under the brand Lewatit^{®}.

Alternatively, however, it is also possible to use anion-exchanging Amberlite^{®} or Duolite^{®} from Rohm&Haas, now Dow Chemical Company, preferably IRA410Cl or DOWEX MSA 2 from Dow Chemical Company.

Anion exchangers which contain dimethylaminohydroxyethyl groups, such as Lewatit^{®} M+ MP 600 and Lewatit^{®} M+ M 600, IRA 410 and DOWEX MSA 2, are particularly preferably used according to the invention.

The anion exchangers in filter unit C1 should preferably be present in the chloride or sulphate form. The sulphate form of the anion exchanger is particularly preferred according to the invention.

The solid or macroporous anion-exchanging organic materials having amino groups may be industrial products, which of course, although less preferred, may also contain small proportions of free amines or amine salts or other by-products.

As soon as the anion exchanger in filter unit C1 is exhausted with regard to the arsenic uptake, it is regenerated with a brine from the secondary brine circulation.

Here, the valves V1 and V2 are set so that only the brine is washed through the filter unit C1, the purification the water to be purified is interrupted for this time or can continue without interruption via a further filter unit C1' connected parallel to the filter unit C1 and likewise filled with an anion exchanger. The anion exchanger is exhausted in the context of the present invention when the outflow concentration exceeds the limit of 10 mg/l of As.

In the closed secondary circulation, the brine used for the regeneration of the anion exchanger is pumped either in the direction of the flow direction of the water to be purified onto the filter unit C1 or countercurrently onto the filter unit C1 or through the filter unit C1. The regeneration is preferably effected countercurrently, as shown in Fig. 2.

A sulphate- or chloride-containing brine of an alkali metal salt is preferably used as the brine. In particular, a sodium sulphate brine is used. The concentration of the salt in aqueous medium of the brine is preferably 5-15% by weight, particularly preferably 8-12% by weight.

The regeneration of the anion exchange resin takes place preferably at temperatures from 5°C to 90°C, more preferred at temperatures from 20°C to 50°C and most preferred at temperatures from 25°C to 40°C.

For this purpose, the brine is optionally taken from a brine tank T1 by means of a pump P, pumped through the filter unit C1 and then fed to a filter unit C2 which is filled with an oxo anion-specific adsorber. The outflow from the filter unit C2 leads either into the brine tank T1 or, in an alternative embodiment (without T1), via the pump P back to the filter unit C1.

In the filter unit C2, the brine containing oxo anions as a result of the regeneration from filter unit C1 is filtered via an oxo anion-specific adsorber and freed thereby from the oxo anions to be removed, preferably from oxo anions of arsenic, of antimony, of bismuth, of selenium, of chromium or of uranium, particularly preferably from oxo anions of arsenic, of antimony, of selenium, of bismuth or of chromium, in particular from oxo anions of arsenic, of antimony, of bismuth, very particularly preferably from oxo anions of arsenic.

Thereafter, the brine can be used again for the regeneration of weakly or strongly basic ion exchanger for the primary purification of drinking water in filter unit C1.

The adsorber laden with the regenerating brine in filter unit C2 can be used several times for recycling the regenerating solution until the exhaustion of said adsorber.

After complete loading of the oxo anion-selective adsorber in filter unit C2, the latter can be disposed of as waste according to the applicable regulations or it can in turn be restored again by regeneration.

The oxo anion-specific adsorber to be used in filter unit C2 is at least one adsorber of the series consisting of metal oxide, metal hydroxide, metal oxide/hydroxide-doped ion exchanger or hybrid exchanger.

Metal oxide or metal hydroxide adsorbers preferably to be used according to the invention are metal oxides or metal hydroxides which contain at least one metal of the series consisting of Fe, Mn, Al, Ti or La, particularly preferably Fe, Mn or Al, especially preferably Fe.

The metal oxide or metal hydroxide adsorbers are preferably used in the form of granules. Examples of granules are described in EP 1 582 505 A1, WO 02/26630 A1, WO 02/26632 A1, DE 4 320 003 A1 or WO 02/47811 A1.

Metal oxide/hydroxide-doped ion exchangers preferably to be used according to the invention are described in WO 2004/110623 A, EP 1495800 A2 or EP 1844854 A1.

Examples of hybrid ion exchangers are to be found in EP 1568660 A1 or EP 1844854 A1.

Iron-, manganese-, aluminium-, zirconium- or copper-doped hybrid ion exchangers are particularly preferably used in filter unit C2. Said metals are used in the form of their oxides and/or their hydroxides.

Particularly preferably used iron-, manganese-, aluminium-, zirconium- or copper-doped ion exchangers are those whose arsenate salt has a Kₛₚ ≤ 10⁻⁵.

Iron-doped hybrid ion exchangers are particularly preferably used, in particular very particularly preferably iron oxide/hydroxide-doped anion exchangers.

In particular, the metal oxide/hydroxide-doped ion exchangers or hybrid exchangers very particularly preferably also have a monodisperse particle size distribution.

The preparation of a hybrid ion exchanger based on an anion exchanger comprising doped iron oxide/hydroxide is the subject of EP 1844854 A1. Example 2 of EP 1844854 A1 teaches the preparation of such a hybrid ion exchanger based on a macroporous, monodisperse anion exchanger carrying aminomethyl groups, and Example 3 teaches the preparation of such a hybrid ion exchanger based on a macroporous, monodisperse anion exchanger carrying dimethylamino groups.

Alternatively, however, it is also possible to use metal oxide/hydroxide, in particular iron oxide/hydroxide-doped hybrid ion exchangers based on strongly basic anion exchangers having trimethylammonium groups or dimethylhydroxyethyl groups, as described in US 2005/0156136 A1 or US 2006/0037913 A1.

Alternatively, instead of said anion exchangers, it is however also possible to use cation exchangers or chelate resins, doped in each case with at least one of the abovementioned metals, as a basis for the hybrid ion exchanger.

According to the invention, however, the macroporous, monodisperse anion exchanger having dimethylamino groups, according to Example 3 of EP 1 844 854 A1, doped with iron oxide/hydroxide, is particularly preferably used in filter unit C2.

On use of the process, it has surprisingly been found that weakly or strongly basic anion exchangers, in particular of type II und higher, have only a very low selectivity with respect to the uptake of silicate, and the ion exchanger used in filter unit 1 for water purification becomes only slightly laden with silicate. Consequently, the brine used for the regeneration also contains only a little silicate or the concentration ratio of silicate to oxo anion in the regeneration brine is substantially less than in the treated drinking water.

Owing to the low silicate content in the brine, the uptake of the oxo anion to be removed is only slightly disturbed by the oxo anion-selective adsorber in filter unit 2 and, in this configuration, the oxo anion-selective adsorber may be substantially more highly laden than under conditions if it were used for the direct filtration of the drinking water.

In addition to the longer cycle time of the ion exchanger in filter unit 1, the total service life thereof also increases over a plurality of regenerations. Moreover, there is also no noticeable fouling, as is observable in the case of comparable processes of the prior art.

Owing to a longer duration of use of the oxo anion-selective adsorber in which it does not come into contact at all with the silicate-containing water, the process as a whole is more economical than the processes of the prior art. As a result, an economical solution for water treatment can be provided in regions where the use of special adsorbents for arsenic was not possible to date.

The filter arrangement according to Fig. 1 or Fig. 2 which is to be used for the process according to the invention is preferably carried out with the use of the following materials:
filter unit C1 comprising steel, stainless steel, glass,
filter unit C2 comprising steel, stainless steel, glass,
brine circulation comprising steel, stainless steel, glass.

The operating temperature of the process or the apparatus is in the range of 2 to 60°C, preferably of 10 to 28°C.

For clarification, it should be noted that all general definitions and parameters mentioned herein or those mentioned in preferred ranges are encompassed in any desired combinations by the scope of the invention.

### Examples

### 1. Example of the preparation of an anion exchanger of type II having dimethylhydroxyethylammonium groups and to be used according to the invention in filter unit C1

### 1a) Preparation of a monodisperse, macroporous bead polymer based on styrene, divinylbenzene and ethylstyrene.

3000 g of demineralized water were initially introduced into a 10 1 glass reactor and a solution of 10 g of gelatin, 16 g of disodium hydrogen phosphate dodecahydrate and 0.73 g of resorcinol in 320 g of deionized water was added and thorough mixing was effected. The mixture was thermostated at 25°C. A mixture of 3200 g of microencapsulated monomer droplets having a narrow particle size distribution, comprising 3.6% by weight of divinylbenzene and 0.9% by weight of ethylstyrene (used as commercially available isomer mixture comprising divinylbenzene and ethylstyrene with 80% of divinylbenzene), 0.5% by weight of dibenzoyl peroxide, 56.2% by weight of styrene and 38.8% by weight of isododecane (industrial isomer mixture having a high proportion of pentamethylheptane) was then added with stirring, the microcapsules consisting of a formaldehyde-hardened complex coacervate comprising gelatin and a copolymer of acrylamide and acrylic acid, and 3200 g of aqueous phase having a pH -of 12 were added. The mean particle size of the monomer droplets was 460 µm.

The batch was polymerized with stirring by increasing the temperature according to a temperature programme beginning at 25°C and ending at 95°C. The batch was cooled, washed over a 32 µm sieve and then dried in vacuo at 80°C. 1893 g of a spherical polymer having a mean particle size of 440 µm, a narrow particle size distribution and a smooth surface were obtained.

The polymer had a chalky white appearance and had a bulk density of about 370 g/l.

### 1b) Preparation of an amidomethylated bead polymer

At room temperature, 3567 g of dichloroethane, 867 g of phthalimide and 604 g of 29.8% strength by weight formalin were additionally introduced. The pH of the suspension was adjusted to 5.5 to 6 with sodium hydroxide solution. The water was then removed by distillation. 63.5 g of sulphuric acid were then metered in. The resulting water was removed by distillation and the batch was then cooled. At 30°C, 232 g of 65% strength oleum and then 403 g of monodisperse bead polymer, prepared according to process step 1a), were metered in. The suspension was heated to 70°C and stirred at this temperature for a further 6 hours. The reaction liquor was taken off, demineralized water was metered in and the remaining amounts of dichloroethane were removed by distillation.

Yield of amidomethylated bead polymer 2600 ml

| | |
|---|---|
| Composition according to elemental analysis: | |
| carbon: | 74.9% by weight, |
| hydrogen: | 4.6% by weight, |
| nitrogen: | 6.0% by weight |
| remainder: | oxygen. |

### 1c) Preparation of an aminomethylated bead polymer

624 g of 50% strength by weight sodium hydroxide solution and 1093 ml of demineralized water were metered at room temperature into 1250 ml of amidomethylated bead polymer from 1b). The suspension was heated to 180°C in 2 hours and stirred at this temperature for 8 hours. The bead polymer obtained was washed with demineralized water.

The yield of aminomethylated bead polymer was: 1110 ml

| | |
|---|---|
| Composition according to elemental analysis: | |
| nitrogen: | 12.6% by weight, |
| carbon: | 78.91% by weight, |
| hydrogen: | 8.5% by weight. |

From the composition of the aminomethylated bead polymer according to elemental analysis, it was possible to calculate that, on statistical average, 1.34 hydrogen atoms were substituted by aminomethyl groups per aromatic nucleus - originating from styrene and divinylbenzene units.

Determination of the amount of basic groups: 2.41 mol/litre of resin

### 1 d) Preparation of a monodisperse weakly basic anion exchanger having dimethylamino groups

At room temperature, 1000 ml of demineralized water and 500.7 g of 30.32% strength by weight formalin solution were metered into 1000 ml of aminomethylated bead polymer from Example 1c). The batch was heated to 40°C. Heating to 97°C was then effected in 2 hours. All together 286.9 g of 85% strength by weight formic acid were metered in here. The pH was then adjusted to pH 1 with 50% strength by weight sulphuric acid within one hour. At pH 1, stirring was continued for a further 10 hours. All together, 398 g of 50% by weight sulphuric acid were consumed. After cooling, the resin was washed with demineralized water, transferred to a column and freed from sulphate with sodium hydroxide solution and converted into the OH form.

The yield of resin having dimethylamino groups was: 1440 ml

The product contained 2.05 mol of dimethylamino groups/litre of resin.

### 1e) Preparation of a monodisperse strongly basic anion exchanger of type II having dimethylaminohydroxyethyl groups

At room temperature, 622 ml of demineralized water and 1060 ml of anion exchanger from Example 1d), containing dimethylamino groups, were initially introduced. 205 grams of chloroethanol were metered in with stirring at room temperature within 30 minutes. The suspension was heated to 55°C. The pH of the suspension was adjusted to pH 9 by metering of 20% strength by weight sodium hydroxide solution. Stirring was effected for a further hour at pH 9. The pH was then adjusted to pH 9.5 and stirring was effected for a further hour at pH 9.5.

The pH was then adjusted to 10 and stirring was effected for a further 4 hours at pH 10.

The suspension was cooled to room temperature and transferred to a column. 10 litres of demineralized water and then 2 litres of 3% strength by weight hydrochloric acid and thereafter 5 litres of demineralized water were filtered over the resin.
Volume yield: 1650 ml

The product contained 1.11 mol of dimethylaminohydroxyethyl groups per litre of anion exchanger.

### 2. Example of a hybrid ion exchanger to be used according to the invention in filter unit C2.

405 ml of demineralized water and 300 ml of anion exchanger from Example 1d) were initially introduced at room temperature into a reactor. 230 ml of 40% strength by weight of aqueous iron(III) sulphate solution were metered in with stirring in one hour. Stirring was then continued for a further 30 minutes. 83 ml of 50% strength by weight aqueous sodium hydroxide solution were metered in at 25°C within 4.5 hours. Here, the pH of the suspension was increased stepwise to pH 7. At pH 7, stirring was continued for a further 2 hours. 37.5 ml of 25% strength by weight aqueous sodium chloride solution were then metered in within 10 minutes. Stirring was continued for a further 30 minutes. The suspension was poured onto a sieve. The hybrid ion exchanger obtained thereby was washed with demineralized water and then classified in a column.
Yield 460 ml
Iron content: 16% by weight
100 ml of resin in dry form weigh: 35.07 grams

### 3. Example of a brine to be used according to the invention

10% by weight of Na₂SO₄ in water
Operating temperature: 25°C, atmospheric pressure.

### 4. Examples for the separation of arsenic by means of a selective adsorber to be used according to the invention in the presence of silicate

### 4.1 Various filtration curves were recorded with different SiO₂ content in the feedstream of an arsenic-selective adsorber.

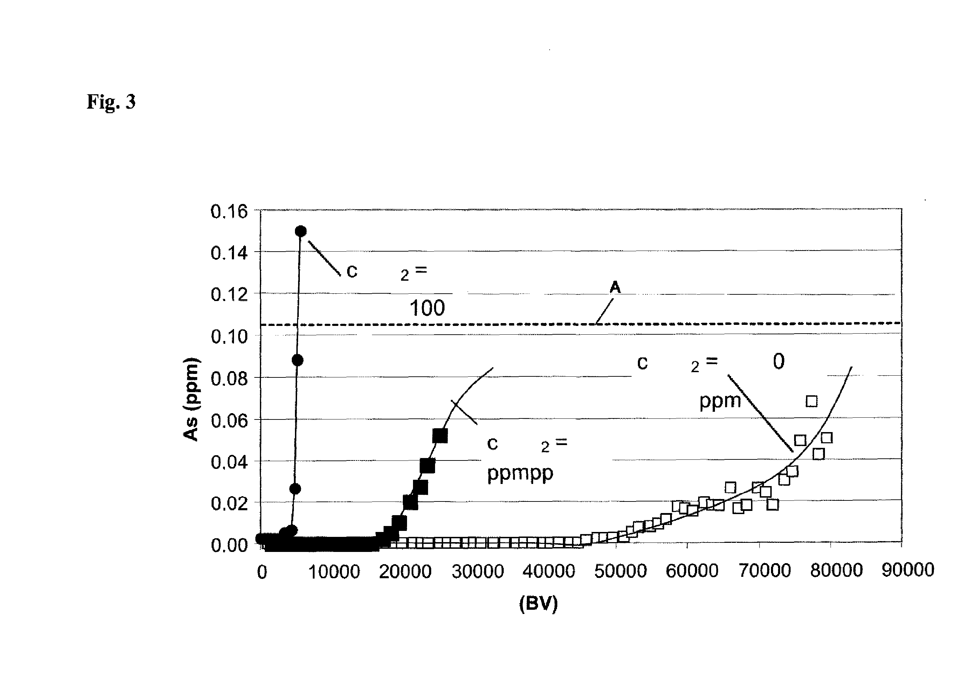

The result is reproduced in Fig. 3. The arsenic concentration in parts per million (ppm = mg/l) in the outflow of the filter is plotted as a function of the filtered water volume in bed volume (BV).

Fig. 3 shows the filtration curves resulting at the same arsenic concentrations but different silicate concentrations in the feed. With increasing silicate concentration in the feed, the result is a shortening of the filtration time. A = feed concentration of arsenic on average 100 ppb.

In all experiments, the specific rate was 20-30 BV/h and the feed concentration of arsenic was on average 100 ppb (0.1 mg/l). 100 ml of arsenic-selective hybrid exchange resin (Lewatit® FO 36) were used in a chromatography column and treated continuously in the exit stream with test water. An overview of the experimental conditions is given in Table 1.

**Table 1: Experimental conditions in Example 4.1**

| | |
|---|---|
| Arsenic concentration in the feed: | about 100 ppb or 0.1 ppm (Arsenic (V)) |
| 3 experiments with silicate concentration | 0.0 ppm SiO₂, 7.0 ppm SiO₂ and |
| in the feed: | 100 ppm SiO₂, respectively |
| Other anions in the feed: | 160 mg/l HCO₃⁻, 50 mg/l Cl⁻, 13 mg/l SO₄²⁻, 7 mg/l SiO₂, 0.18 mg/l H₂PO₄⁻, |
| pH in the feed: | 7 |
| Arsenic adsorber type: | Lewatit® FO36 (arsenic-selective hybrid adsorber) |
| Filter bed volume: | 100 ml |
| Diameter of the column: | 22 mm |
| Bed height: | 280 mm |
| Feed rate: | 2-3 l/h |
| Specific rate: | 20-30 BV/h |

It is evident from Fig. 3 that the filtrate volume obtained until the breakthrough of arsenic decreased with increasing silicate concentration. If this filtrate volume is related to a breakthrough point of 0.01 ppm of arsenic in the outflow of the filter, it was thus possible to filter about 50 000 BV with 0 ppm of SiO₂ in the feed, only 20 000 BV with 7 ppm of SiO₂ and still only 4500 BV with 100 ppm of SiO₂. The filtration performance could therefore be reduced by up to 90% by the presence of silicate, additionally altering the danger of displacement of already adsorbed arsenic by silicate. The displacement effect is detectable by the arsenic concentration exceeding the feed concentration in the curve with 100 ppm of SiO₂.

In the case of waters highly laden with silicon, the use of arsenic-selective filters is therefore also substantially limited in their efficiency.

Usable capacities resulting in the three test series are calculated as follows:

**Table 2: Usable capacity achieved as a function of the silicate concentration in the feed.**

| **SiO₂ concentration** | **As (V) absorption** |
|---|---|
| 0 ppm | 7 g/l |
| 7 ppm | 2 g/l |
| 100 ppm | 0.45 g/l |

The problem of arsenic separation by arsenic-selective adsorbers with an iron oxide hydroxide phase is demonstrated thereby.

### 4.2 The experiment carried out in this example demonstrates the achievable usable capacity of a strongly basic anionic exchanger (Type II). The process conditions are comparable with Example 4.1. For this purpose, a test water with 100 ppm of SiO₂ and 100 ppb of As(V) was prepared and was filtered over 100 ml of Lewatit® Monoplus M600 in a chromatography column.

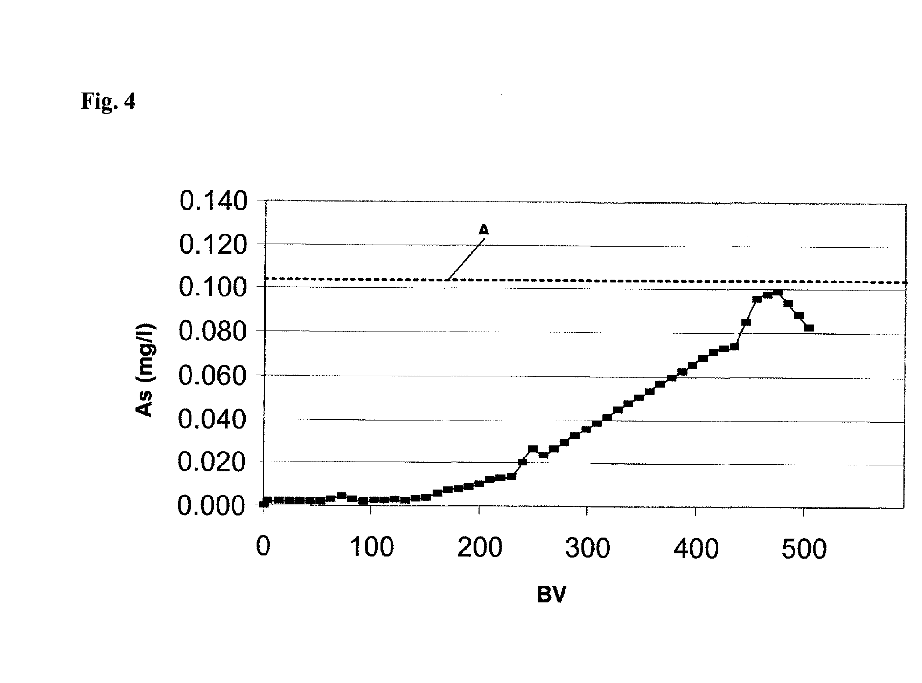

The result is shown in Fig. 4. As in Fig. 3, the arsenic concentration in parts per million (ppm = mg/l) in the outflow of the filter is plotted as a function of the filtered water volume in bed volume (BV). A = feed concentration of arsenic on average 100 ppb.

Fig. 4 shows the filtration of arsenic over a non-arsenic-selective strongly basic anion exchanger.

The exact experimental conditions of Example 4.2 are listed in Table 3:

**Table 3: Experimental conditions in Example 2**

| | |
|---|---|
| Arsenic concentration in the feed: | about 100 ppb or 0.1 ppm (arsenic (V)) |
| Silicate concentration in the feed: | 100 ppm of SiO₂ |
| Other anions in the feed: | 160 mg/l HCO₃⁻, 50 mg/l Cl⁻, 13 mg/l SO₄²⁻, 7 mg/l SiO₂, 0.18 mg/l H₂PO₄⁻ |
| pH in the feed: | 7 |
| Adsorber type: | Lewatit® MonoPlus M600 (strongly basic anionic exchanger) |
| Filter bed volume: | 100 ml |
| Diameter of the column: | 22 mm |
| Bed height: | 280 mm |
| Feed rate: | 2-3 l/h |
| Specific rate: | 20-30 BV/h |

It is evident from Fig. 4 that the outflow concentration of arsenic in the exit of the filter at a filtration volume of about 200 BV had increased to 0.01 ppm, which corresponds to a usable capacity of about 0.02 g/l. Altogether, the resin was laden with about 3.5 mg of arsenic up to termination of the experiment at a filtrate volume of 500 BV.

If the values for the usable capacity (based on termination at 0.01 ppm of arsenic in the filter outflow and 100 ppm of SiO₂ in the feed) of Example 4.1 and Example 4.2 are compared, the following results:

| | |
|---|---|
| Usable capacity in the case of arsenic-selective filter (Example 4.1): | 0.45 g/l |
| Usable capacity in the case of strongly basic filter (Example 4.2): | 0.02 g/l |

The capacity of the strongly basic filter is therefore a factor of 22.5 lower than that of the arsenic-selective filter. The substantially lower load in the case of the strongly basic resin is due to the lower selectivity for arsenic or the stronger competition by the sulphate and chloride ions present in addition to arsenic in the water.

However, the aim of this experiment was not so much to demonstrate the different selectivities of different resins with respect to the arsenic absorption. Rather, the aim was to work out calculation data for the following considerations as well as to load a strongly basic resin with arsenic in order to simulate a regeneration and to obtain indications of the composition of a regenerate stream.

### 4.3 The resin loaded with arsenic as in Example 4.2 was regenerated by means of a highly concentrated salt solution. 3 BV of a 7% strength Na₂SO₄ solution were pumped at a rate of 4 BV/h over the resin. The regenerate which flowed out of the column and was collected and homogenised was analyzed. Altogether 3 mg of arsenic and 40 mg of SiO₂ were detected analytically in the spent regenerate.

This corresponds to a recovery rate of arsenic of about 86%.

The recovery rate for SiO₂ is calculated as follows: In the filtration in Example 4.2, altogether 500 BV were filtered, with 100 ppm of SiO₂ in the feed. This corresponds to treatment of the filter with altogether 5000 mg of SiO₂. Based on the 40 mg of SiO₂ occurring in the regenerate, this corresponds to a recovery rate of only 0.8%. The low recovery rate for silicate is due to the only low selectivity with respect to the uptake of silicate by the resin.

Since, in this experiment, the resin bed has been washed with brine and not with water, it is presumed that a part of the SiO₂ recovered in the regenerate also originates from process water which has not been displaced. Thus, it is to be expected that the introduction of SiO₂ into the regeneration brine can be further reduced by at least the factor 3 by washing the resin bed prior to regeneration.

The experimental conditions in Example 4.3 are shown in Table 4.

**Table 4: Experimental conditions in Example 4.3**

| | |
|---|---|
| Concentration of the regeneration solution: | 7% of Na₂SO₄ |
| Amount of the regeneration solution: | 300 ml |
| Feed stream: | 400 ml/h |
| Flow rate during regeneration: | 4 BV/h |
| Adsorber type: | Lewatit® MonoPlus M600 as explained in Example 2, laden with arsenic (V) |
| Loading of the adsorber: | about 3.5 mg absolute or about 35 mg/l specific loading |
| Resin volume: | 100 ml |

The investigations relating to this Example 4.3 make it possible to estimate that, in an industrial process, a brine used for regenerating strongly basic anion exchangers will have an arsenic concentration of 2 to 10 mg/l. The concentration actually achieved will depend there on the feed concentration during the loading and on the duration of loading.

The silicon concentration in the regeneration brine is also likely to be about 10 mg/l, depending on the feed condition (SiO₂ concentration in the feed and washout conditions).

A consideration of the ratios of the concentrations of SiO₂ to As in the regenerate of the strongly basic anion exchanger and in the original water initially filtered is now of interest.

Concentration ratio of SiO₂ to As in original water = 100/0.1 = 1000

Concentration ratio of SiO₂ to As in the regeneration brine = 10/10 = 1

It has thus been possible to transfer the arsenic from the original solution having a relatively high silicate content to water having a silicate content which is 1000 times lower. To demonstrate this was the purpose of the experiments carried out in Examples 4.2 and 4.3.

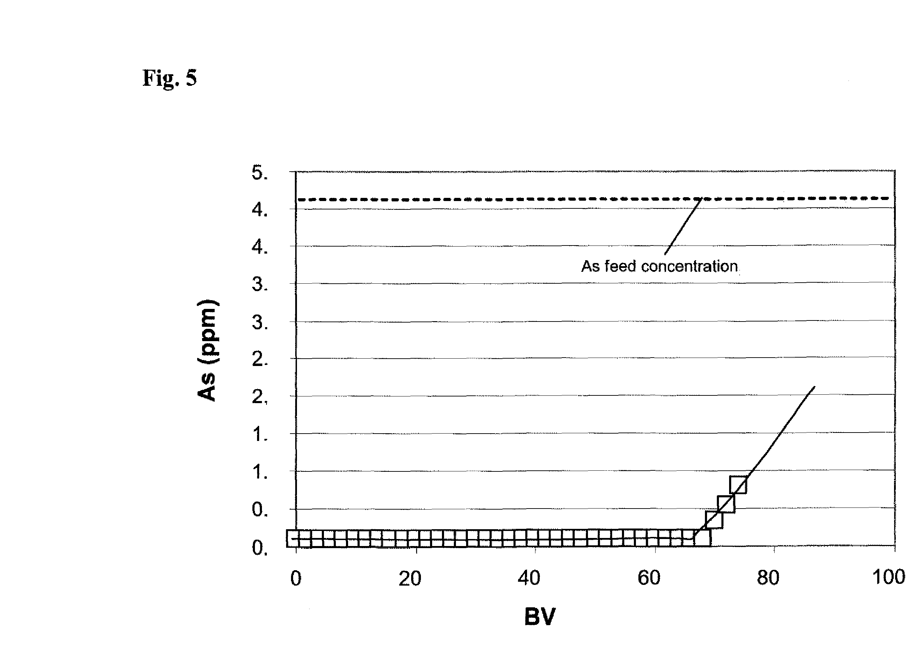

### 4.4 This example simulates the purification of a regeneration brine according to Example 4.3, laden with arsenic and silicate, using arsenic-selective resin. For this purpose, 7% strength sodium sulphate solution having 4.5 mg/l of arsenic (V) and 10 mg/l of SiO₂ was passed over an arsenic-selective hybrid adsorber. The corresponding filtration curve is shown in Fig. 5.

Fig. 5: Filtration of an arsenic-containing 7% strength Na₂SO₄ brine over an arsenic-selective adsorber material Lewatit® FO 36

The experimental conditions for Example 4.4 are shown in Table 5:

**Table 5: Experimental conditions in Example 4.4**

| | | |
|---|---|---|
| Arsenic concentration in the feed: | | 4.5 ppm |
| Silicate concentration in the feed: | | 10 ppm of SiO₂ |
| pH in the feed: | | 7.0 |
| Adsorber type: | | Lewatit® FO 36 (arsenic-selective hybrid adsorber) |
| Filter bed volume: | | 100 ml |
| Diameter of the column: | | 22 mm |
| Bed height: | | 280 mm |
| Feed rate: | | 2-3 l/h |
| Specific rate: | | 20-30 BV/h |

It is evident from Fig. 5 that arsenic can be efficiently removed from the brine solution over about 700 BV. At 700 BV, the resin has reached a specific load of about 3.2 g/l.

In the loading of the arsenic-selective hybrid adsorber via the regeneration brine of a strongly basic anion exchanger (Example 4.4), it is therefore possible to achieve usable capacities of 3.2 g/l, which is about 7 times more than in the direct loading of the arsenic adsorber, according to Example 4.1. Here, only a load of 0.45 g/l was achieved at 100 ppm silicate in the feed.

Furthermore, it is now possible to calculate that, on combination of filters of the same size (strongly basic anion exchanger/arsenic adsorber in the context of this invention) and with the use of 3 BV of brine regenerating the strongly basic anion exchanger, about 700/3 = 230 regenerations can be carried out before the arsenic adsorber is exhausted.

The running time of the arsenic-selective filter is then calculated as follows:
If, as in Example 4.2, 200 BV are filtered at a specific rate of 20 BV/h, the result is a running time of 10 hours for the strongly basic anion exchanger. This is then regenerated with 3 BV of brine and this brine is then recycled via the arsenic-selective adsorber, the result is altogether 10 × 230 = 2300 operating hours, i.e. about 100 days.

This running time of 100 days is true for the uninterrupted treatment of the filter, as is the case in some municipal plants.

In the household, however, a filter does not run continuously but at most only for 5 hours per day. Under this precondition, regeneration will then have to be effected only every 2 days. The calculated running time for use in the household is thus 2 × 130, i.e. 460 days, i.e. about one and a half years. The changing of household filters in an annual cycle would be an acceptable solution for households.

A filter arrangement according to the invention for removing oxo anions from silicate-containing water, **characterized in that** the water to be purified flows through at least one anion exchanger in a filter unit C1 which is connected via a valve V1 before the filter unit C1 and a further valve V2 behind the filter unit C1 to a closed secondary brine circulation comprising the at least one oxo anion-selective adsorber in a filter unit C2, the secondary brine circulation being operated with a pump P and the water to be purified not coming into direct contact with the oxo anion-selective adsorber, shows substantially better removal of oxo anions, in particular of oxo anions of arsenic, in comparison with a filter arrangement according to the prior art DE 10 2006 051 115 A1, where the filters are arranged one behind the other.

## Claims

1. Process for the adsorption of oxo anions from silicate-containing waters, **characterized in that**, for the primary treatment and for the removal of the oxo anion to be removed, the water to be purified is passed via at least one weakly or strongly basic anion exchanger of type I or typ II which is connected via a secondary brine circulation to at least one oxo anion-selective adsorber, and the water to be purified does not come into direct contact with the oxo anion-selective adsorber.

2. Process according to Claim 1, **characterized in that** the silicate-containing waters to be purified are groundwaters, wastewaters from industrial plants or ore mining or bodies of surface water or mountain water.

3. Process according to Claim 1 or 2, **characterized in that** anion-exchanging organic material which contains primary or secondary, tertiary and/or quaternary aminomethyl, dimethylamino, trimethylammonium, dimethylhydroxyethylammonium, ethylenediamine, diethylenetriamine, triethylenetetramine, dimethylaminopropylamine, trimethylaminopropylamine, dimethylhydroxyethylpropylamine groups is used as weakly or strongly basic anion exchanger of type I or of type II.

4. Process according to Claims 1 to 3, **characterized in that** the weakly or strongly basic anion exchanger of type I or the weakly or strongly basic anion exchanger of type II has a monodisperse bead size distribution.

5. Process according to Claims 1 to 4, **characterized in that** oxo anions of the formulae XₙOₘ^{-,}, XₙOₘ²⁻, XₙOₘ³⁻, HXₙOₘ⁻ or H₂XₙOₘ²⁻, in which n represents an integer 1, 2, 3 or 4, m represents an integer 3, 4, 6, 7 or 13 and X represents a metal of the series consisting of As, Sb, Bi, Se, Cr, U, are removed from the silicate-containing waters.

6. Process according to Claims 1 to 5, **characterized in that** at least one adsorber of the series consisting of metal oxide, metal hydroxide, metal oxide/hydroxide-doped ion exchanger or hybrid exchanger is used as the oxo anion-selective adsorber.

7. Process according to Claim 6, **characterized in that** ion exchangers which are doped with a metal of the series consisting of iron, manganese, zirconium, aluminium or copper, in particular with iron, are used as the metal oxide/hydroxide-doped ion exchanger or hybrid exchanger.

8. Process according to Claim 7, **characterized in that** the ion exchangers or hybrid exchangers to be doped are anion exchangers, cation exchangers or chelate resins.

9. Process according to Claim 8, **characterized in that** the anion exchanger is an anion exchanger carrying dimethylamino groups or a strongly basic anion exchanger having trimethylammonium groups or diethylhydroxyethyl groups.

10. Process according to Claim 6, **characterized in that** the metal oxides or metal hydroxides to be used as adsorbers contain at least one metal of the series consisting of Fe, Mn, Al, Ti or La.

11. Process according to Claim 6 or 10, **characterized in that** the metal oxides or metal hydroxides are used in the form of granules.

12. Filter arrangement for removing oxo anions from silicate-containing water, **characterized in that** the water to be purified flows through at least one anion exchanger in a filter unit C1 which is connected via a valve V1 before the filter unit C1 and a further valve V2 behind the filter unit C1 to a closed secondary brine circulation comprising at least one oxo anion-selective adsorber in a filter unit C2, the secondary brine circulation being operated with a pump P and the water to be purified not coming into direct contact with the oxo anion-selective adsorber.

13. Use of a filter arrangement comprising at least one anion exchanger and at least oxo anion-selective adsorber, which are connected to one another via a secondary brine circulation, for selectively separating off oxo anions from silicate-containing waters without the silicate-containing water to be purified coming into direct contact with the oxo anion-selective adsorber.
